(19) Europäisches Patentamt / European Patent Office / Office européen des brevets

(11) **EP 4 518 175 A1**

(12) **EUROPEAN PATENT APPLICATION**
published in accordance with Art. 153(4) EPC

(43) Date of publication:
05.03.2025  Bulletin 2025/10

(21) Application number: 23796786.4

(22) Date of filing: 26.04.2023

(51) International Patent Classification (IPC):
$H04B\ 7/0456\ ^{(2017.01)}$     $H04B\ 7/06\ ^{(2006.01)}$
$H04B\ 17/345\ ^{(2015.01)}$     $H04B\ 7/024\ ^{(2017.01)}$
$H04W\ 24/08\ ^{(2009.01)}$     $H04W\ 72/23\ ^{(2023.01)}$
$H04W\ 72/04\ ^{(2023.01)}$     $H04L\ 5/00\ ^{(2006.01)}$

(52) Cooperative Patent Classification (CPC):
H04B 7/024; H04B 7/0456; H04B 7/06;
H04B 17/345; H04L 5/00; H04W 24/08;
H04W 72/04; H04W 72/23

(86) International application number:
PCT/KR2023/005662

(87) International publication number:
WO 2023/211143 (02.11.2023 Gazette 2023/44)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  28.04.2022  KR 20220053069
13.07.2022  KR 20220086442

(71) Applicant: **LG Electronics Inc.**
**Yeongdeungpo-gu**
**Seoul 07336 (KR)**

(72) Inventors:
• **KIM, Hyungtae**
  **Seoul 06772 (KR)**
• **KANG, Jiwon**
  **Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR TRANSMITTING OR RECEIVING CHANNEL STATE INFORMATION IN WIRELESS COMMUNICATION SYSTEM**

(57) Disclosed are a method and device for transmitting or receiving channel state information in a wireless communication system. A method performed by a terminal in a wireless communication system according to an embodiment disclosed herein may comprise the steps of: receiving one or more channel state information-reference signals (CSI-RSs) from a network; calculating one channel quality indicator (CQI) on the basis of a specific precoding matrix indicator (PMI) that is one of a plurality of PMIs respectively corresponding to a plurality of time units; and transmitting a CSI report, including the one CQI and codebook information corresponding to the plurality of PMIs, to the network, wherein the one CQI may be associated with the specific PMI and a specific time unit that is one of the plurality of time units.

FIG.8

```
Receive at least one CSI-RS                                    ~ S810

Calculate one CQI based on specific PMI that is one of
a plurality of PMIs respectively corresponding to             ~ S820
a plurality of time units

Transmit CSI report including one CQI and codebook information
corresponding to a plurality of PMIs to network               ~ S830
```

**Description**

[Technical Field]

The present disclosure relates to a wireless communication system, and in more detail, relates to a method and a device for transmitting or receiving channel state information in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Object]

A technical problem of the present disclosure is to provide a method and a device for transmitting or receiving channel state information (CSI) in a wireless communication system.

An additional technical problem of the present disclosure is to provide a method and a device for transmitting or receiving CSI report including a codebook corresponding to precoding matrix indication information for multiple time units in a wireless communication system.

The technical objects to be achieved by the present disclosure are not limited to the above-described technical objects, and other technical objects which are not described herein will be clearly understood by those skilled in the pertinent art from the following description.

[Technical Solution]

A method performed by a terminal in a wireless communication system according to an aspect of the present disclosure includes receiving at least one channel state information-reference signal (CSI-RS) from a network; calculating one channel quality indicator (CQI) based on a specific precoding matrix indicator (PMI) that is one of a plurality of PMIs respectively corresponding to a plurality of time units; and transmitting CSI report including the one CQI and codebook information corresponding to the plurality of PMIs to the network, wherein the one CQI may be associated with the specific PMI and a specific time unit that is one of the plurality of time units.

A method performed by a base station in a wireless communication system according to an additional aspect of the present disclosure includes transmitting at least one channel state information-reference signal (CSI-RS) to a terminal; and receiving CSI report including one channel quality indicator (CQI) and codebook information corresponding to a plurality of precoding matrix indicator (PMI) from the terminal, wherein the one CQI may be calculated based on a specific PMI that is one of a plurality of PMIs respectively corresponding to a plurality of time units and the one CQI may be associated with the specific PMI and a specific time unit that is one of the plurality of time units.

[Technical Effects]

According to the present disclosure, a method and a device for transmitting or receiving channel state information (CSI) in a wireless communication system may be provided.

According to an embodiment of the present According to the present disclosure, a method and a device for transmitting or receiving CSI report including a codebook corresponding to precoding matrix indication information for multiple time units in a wireless communication system may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a method of transmitting multiple TRPs in a wireless communication system to which the present disclosure may be applied.
FIG. 8 is a diagram for describing an example of a CSI report transmission method of a terminal according to the present disclosure.
FIG. 9 is a diagram for describing an example of a CSI report reception method of a base station according to the present disclosure.
FIGS. 10 and 11 are a diagram for describing the examples of a CSI reference resource and a CSI report time unit according to the present disclosure.
FIG. 12 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power
L1-RSRQ: Layer 1 reference signal received quality
MAC: medium access control
NZP: non-zero power
OFDM: orthogonal frequency division multiplexing
PDCCH: physical downlink control channel

PDSCH: physical downlink shared channel

PMI: precoding matrix indicator

RE: resource element

RI: Rank indicator

RRC: radio resource control

RSSI: received signal strength indicator

Rx: Reception

QCL: quasi co-location

SINR: signal to interference and noise ratio

SSB (or SS/PBCH block): Synchronization signal block (including PSS (primary synchronization signal), SSS (secondary synchronization signal) and PBCH (physical broadcast channel))

TDM: time division multiplexing

TRP: transmission and reception point

TRS: tracking reference signal

Tx: transmission

UE: user equipment

ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

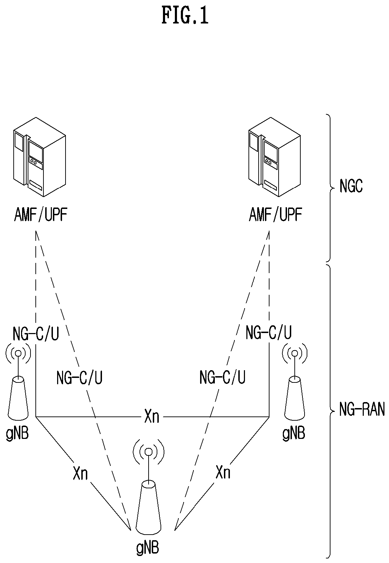

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

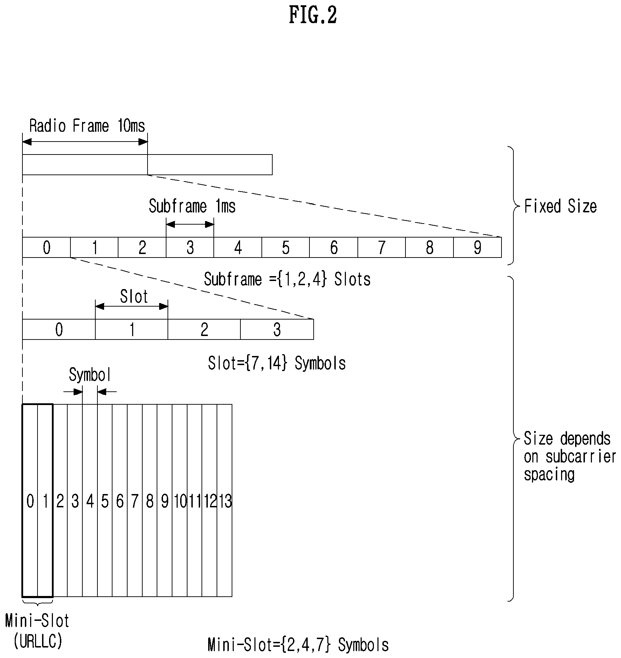

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |

(continued)

| μ | $\Delta f = 2^\mu \cdot 15$ [kHz] | CP |
|---|---|---|
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f/100) \cdot T_c = 10ms$. Here, a radio frame is configured with 10 subframes having a duration of $T_{sf} = (\Delta f_{max} N_f/1000) \cdot T_c = 1ms$, respectively. In this case, there may be one set of frames for an uplink and one set of frames for a downlink. In addition, transmission in an uplink frame No. i from a terminal should start earlier by $T_{TA} = (N_{TA} + N_{TA,offset}) T_c$ than a corresponding downlink frame in a corresponding terminal starts. For a subcarrier spacing configuration μ, slots are numbered in an increasing order of $n_s^\mu \in \{0,..., N_{slot}^{subframe,\mu}-1\}$ in a subframe and are numbered in an increasing order of $n_{s,f}^\mu \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe= {1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.

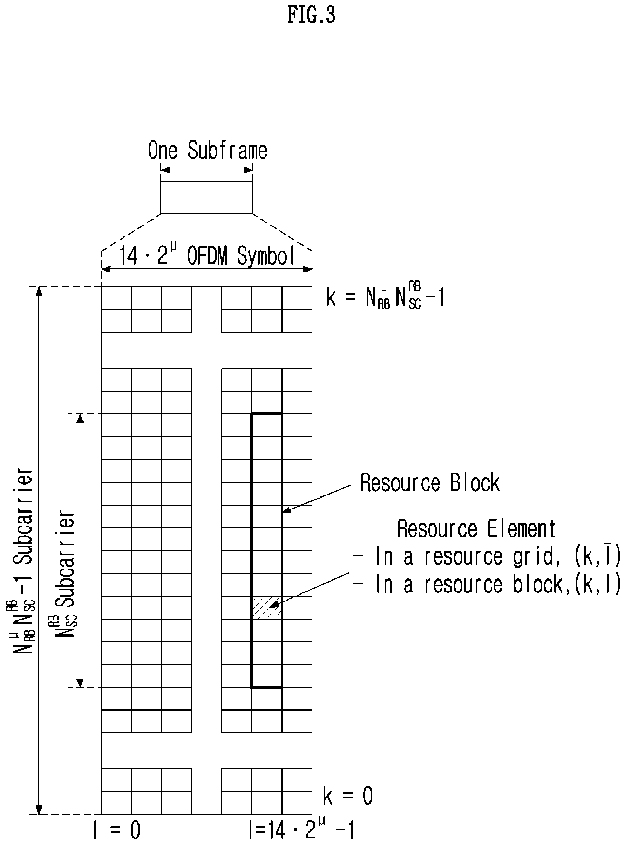

Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing. FIG. 3 illustrates a resource grid in a wireless communication system to which the present disclosure may be applied.

In reference to FIG. 3, it is illustratively described that a resource grid is configured with $N_{RB}^{\mu} N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu} N_{symb}^{(\mu)}$ and one or more resource grids configured with $N_{RB}^{\mu} N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^{\mu} N_{sc}^{RB}-1$ is an index in a frequency domain and $l'=0,...,2^{\mu} N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radio-frequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}-1$ in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

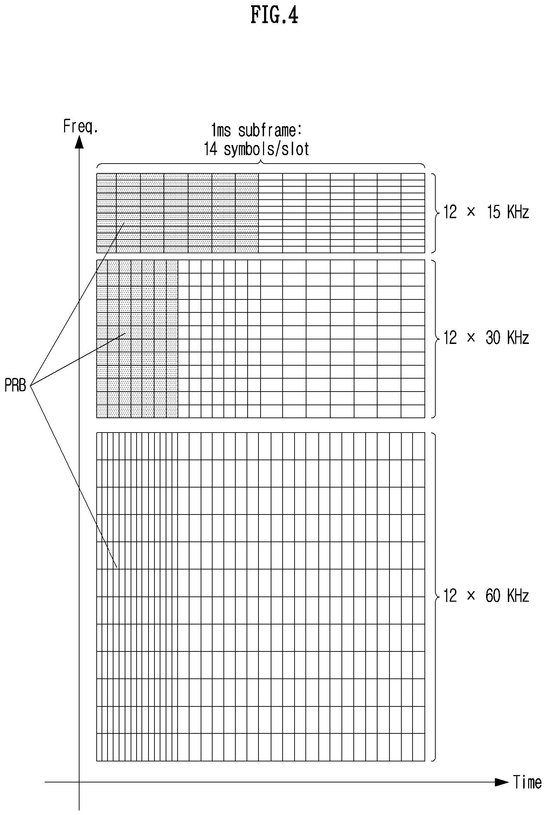

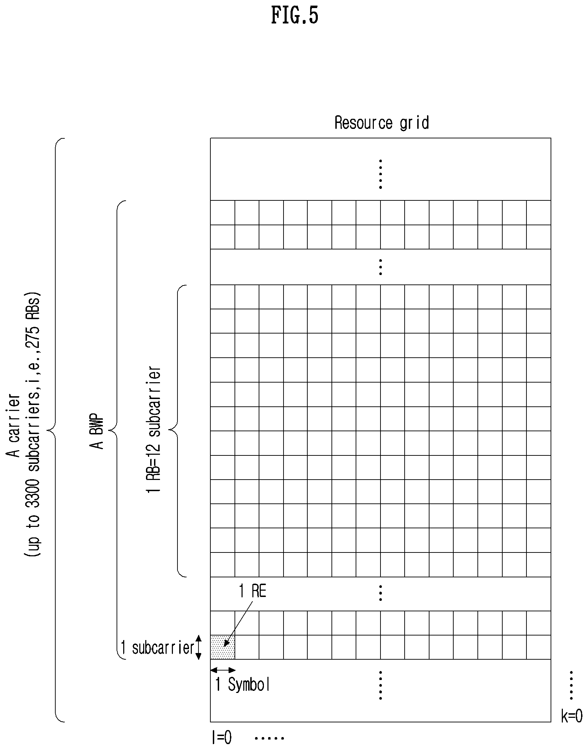

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

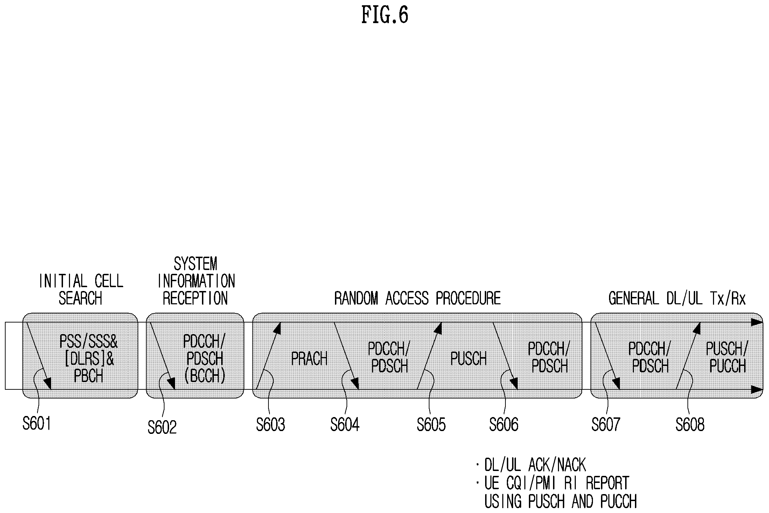

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted. DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted. Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

<u>Operation related to Multi-TRPs</u>

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission(JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(single DCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

For TDM based URLLC M-TRP transmission, scheme 3/4 is under discussion for standardization. Specifically, scheme 4 means a scheme in which one TRP transmits a transport block(TB) in one slot and it has an effect to improve a probability of data reception through the same TB received from multiple TRPs in multiple slots. Meanwhile, scheme 3 means a scheme in which one TRP transmits a TB through consecutive number of OFDM symbols (i.e., a symbol group) and TRPs may be configured to transmit the same TB through a different symbol group in one slot.

In addition, UE may recognize PUSCH (or PUCCH) scheduled by DCI received in different control resource sets(CORESETs)(or CORESETs belonging to different CORESET groups) as PUSCH (or PUCCH) transmitted to different TRPs or may recognize PDSCH (or PDCCH) from different TRPs. In addition, the below-described method for UL transmission (e.g., PUSCH/PUCCH) transmitted to different TRPs may be applied equivalently to UL transmission (e.g., PUSCH/PUCCH)transmitted to different panels belonging to the same TRP.

Hereinafter, multiple DCI based non-coherent joint transmission (NCJT)/single DCI based NCJT will be described.

NCJT(Non-coherent joint transmission) is a scheme in which a plurality of transmission points (TP) transmit data to one terminal by using the same time frequency resource, TPs transmit data by using a different DMRS(Demodulation Multiplexing Reference Signal) between TPs through a different layer (i.e., through a different DMRS port).

A TP delivers data scheduling information through DCI to a terminal receiving NCJT. Here, a scheme in which each TP participating in NCJT delivers scheduling information on data transmitted by itself through DCI is referred to as 'multi DCI based NCJT'. As each of N TPs participating in NCJT transmission transmits DL grant DCI and a PDSCH to UE, UE receives N DCI and N PDSCHs from N TPs. Meanwhile, a scheme in which one representative TP delivers scheduling information on data transmitted by itself and data transmitted by a different TP (i.e., a TP participating in NCJT) through one DCI is referred to as 'single DCI based NCJT'. Here, N TPs transmit one PDSCH, but each TP transmits only some layers of multiple layers included in one PDSCH. For example, when 4-layer data is transmitted, TP 1 may transmit 2 layers and TP 2 may transmit 2 remaining layers to UE.

Multiple TRPs (MTRPs) performing NCJT transmission may transmit DL data to a terminal by using any one scheme of the following two schemes.

First, 'a single DCI based MTRP scheme' is described. MTRPs cooperatively transmit one common PDSCH and each TRP participating in cooperative transmission spatially partitions and transmits a corresponding PDSCH into different layers (i.e., different DMRS ports) by using the same time frequency resource. Here, scheduling information on the PDSCH is indicated to UE through one DCI and which DMRS (group) port uses which QCL RS and QCL type information is indicated by the corresponding DCI (which is different from DCI indicating a QCL RS and a type which will be commonly applied to all DMRS ports indicated as in the existing scheme). In other words, M TCI states may be indicated through a TCI(Transmission Configuration Indicator) field in DCI (e.g., for 2 TRP cooperative transmission, M=2) and a QCL RS and a type may be indicated by using M different TCI states for M DMRS port group. In addition, DMRS port information may be indicated by using a new DMRS table.

Next, 'a multiple DCI based MTRP scheme' is described. Each of MTRPs transmits different DCI and PDSCH and (part or all of) the corresponding PDSCHs are overlapped each other and transmitted in a frequency time resource. Corresponding PDSCHs may be scrambled through a different scrambling ID (identifier) and the DCI may be transmitted through a CORESET belonging to a different CORESET group. (Here, a CORESET group may be identified by an index defined in a CORESET configuration of each CORESET. For example, when index = 0 is configured for CORESETs 1 and 2 and index = 1 is configured for CORESETs 3 and 4, CORESETs 1 and 2 are CORESET group 0 and CORESET 3 and 4 belong to a CORESET group 1. In addition, when an index is not defined in a CORESET, it may be construed as index=0) When a plurality of scrambling IDs are configured or two or more CORESET groups are configured in one serving cell, a UE may notice that it receives data according to a multiple DCI based MTRP operation.

Alternatively, whether of a single DCI based MTRP scheme or a multiple DCI based MTRP scheme may be indicated to UE through separate signaling. In an example, for one serving cell, a plurality of CRS (cell reference signal) patterns may be indicated to UE for a MTRP operation. In this case, PDSCH rate matching for a CRS may be different depending on a single DCI based MTRP scheme or a multiple DCI based MTRP scheme (because a CRS pattern is different).

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID)/the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

Hereinafter, partially overlapped NCJT will be described.

In addition, NCJT may be classified into fully overlapped NCJT that time frequency resources transmitted by each TP are fully overlapped and partially overlapped NCJT that only some time frequency resources are overlapped. In other words, for partially overlapped NCJT, data of both of TP 1 and TP 2 are transmitted in some time frequency resources and data of only one TP of TP 1 or TP 2 is transmitted in remaining time frequency resources.

Hereinafter, a method for improving reliability in Multi-TRP will be described.

As a transmission and reception method for improving reliability using transmission in a plurality of TRPs, the following two methods may be considered.

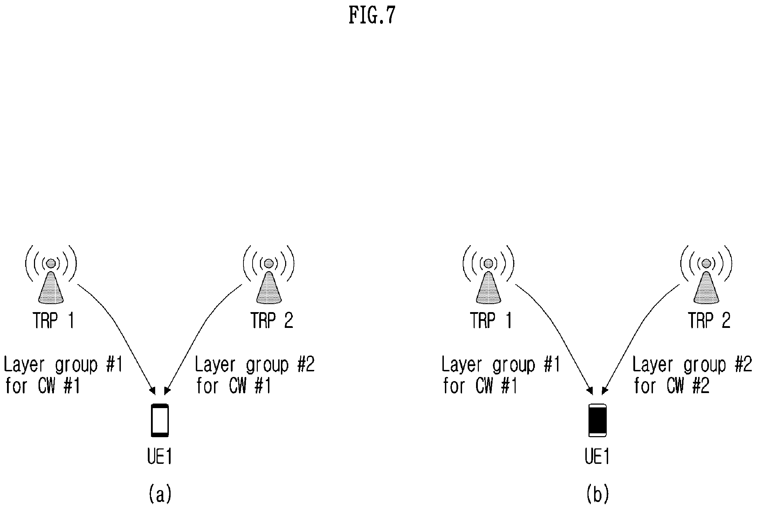

FIG. 7 illustrates a method of multiple TRPs transmission in a wireless communication system to which the present disclosure may be applied.

In reference to FIG. 7(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 7(b), it may have a disadvantage that a code rate corresponding to a TB is higher compared to FIG. 7(a). However, it has an advantage that it may adjust a code rate by indicating a different RV (redundancy version) value or may adjust a modulation order of each CW for encoded bits generated from the same TB according to a channel environment.

According to methods illustrated in FIG. 7(a) and FIG. 7(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

Regarding a method for multiple TRPs based URLLC scheduled by single DCI, the following method is discussed.

1) Method 1 (SDM): Time and frequency resource allocation is overlapped and n (n<=Ns) TCI states in a single slot

1-a) Method 1a

-    The same TB is transmitted in one layer or layer set at each transmission time (occasion) and each layer or each layer set is associated with one TCI and one set of DMRS port(s).
-    A single codeword having one RV is used in all spatial layers or all layer sets. With regard to UE, different coded bits are mapped to a different layer or layer set by using the same mapping rule.

1-b) Method 1b

- The same TB is transmitted in one layer or layer set at each transmission time (occasion) and each layer or each layer set is associated with one TCI and one set of DMRS port(s).
- A single codeword having one RV is used in each spatial layer or each layer set. RV(s) corresponding to each spatial layer or each layer set may be the same or different.

1-c) Method 1c

- At one transmission time (occasion), the same TB having one DMRS port associated with multiple TCI state indexes is transmitted in one layer or the same TB having multiple DMRS ports one-to-one associated with multiple TCI state indexes is transmitted in one layer.

In case of the method 1a and 1c, the same MCS is applied to all layers or all layer sets.

2) Method 2 (FDM): Frequency resource allocation is not overlapped and n (n<=Nf) TCI states in a single slot

- Each non-overlapping frequency resource allocation is associated with one TCI state.
- The same single/multiple DMRS port(s) are associated with all non-overlapping frequency resource allocation.

2-a) Method 2a

- A single codeword having one RV is used for all resource allocation. With regard to UE, common RB matching (mapping of a codeword to a layer) is applied to all resource allocation.

2-b) Method 2b

- A single codeword having one RV is used for each non-overlapping frequency resource allocation. A RV corresponding to each non-overlapping frequency resource allocation may be the same or different.

For the method 2a, the same MCS is applied to all non-overlapping frequency resource allocation.

3) Method 3 (TDM): Time resource allocation is not overlapped and n (n<=Nt1) TCI states in a single slot

- Each transmission time (occasion) of a TB has time granularity of a mini-slot and has one TCI and one RV.
- A common MCS is used with a single or multiple DMRS port(s) at every transmission time (occasion) in a slot.
- A RV/TCI may be the same or different at a different transmission time (occasion).

4) Method 4 (TDM): n (n<=Nt2) TCI states in K (n<=K) different slots

- Each transmission time (occasion) of a TB has one TCI and one RV.
- Every transmission time (occasion) across K slots uses a common MCS with a single or multiple DMRS port(s).
- A RV/TCI may be the same or different at a different transmission time (occasion).

Hereinafter, MTRP URLLC is described.

In the present disclosure, DL MTRP URLLC means that multiple TRPs transmit the same data (e.g., the same TB)/DCI by using a different layer/time/frequency resource. For example, TRP 1 transmits the same data/DCI in resource 1 and TRP 2 transmits the same data/DCI in resource 2. UE configured with a DL MTRP-URLLC transmission method receives the same data/DCI by using a different layer/time/frequency resource. Here, UE is configured from a base station for which QCL RS/type (i.e., a DL TCI state) should be used in a layer/time/frequency resource receiving the same data/DCI. For example, when the same data/DCI is received in resource 1 and resource 2, a DL TCI state used in resource 1 and a DL TCI state used in resource 2 may be configured. UE may achieve high reliability because it receives the same data/DCI through resource 1 and resource 2. Such DL MTRP URLLC may be applied to a PDSCH/a PDCCH.

And, in the present disclosure, UL MTRP-URLLC means that multiple TRPs receive the same data/UCI(uplink control information) from any UE by using a different layer/time/frequency resource. For example, TRP 1 receives the same data/DCI from UE in resource 1 and TRP 2 receives the same data/DCI from UE in resource 2 to share received data/DCI through a backhaul link connected between TRPs. UE configured with a UL MTRP-URLLC transmission method transmits the same data/UCI by using a different layer/time/frequency resource. In this case, UE is configured from a base station for which Tx beam and which Tx power (i.e., a UL TCI state) should be used in a layer/time/frequency resource transmitting the same data/DCI. For example, when the same data/UCI is transmitted in resource 1 and resource 2, a UL TCI state used in resource 1 and a UL TCI state used in resource 2 may be configured. Such UL MTRP URLLC may be applied to a PUSCH/a PUCCH.

In addition, in the present disclosure, when a specific TCI state (or TCI) is used (or mapped) in receiving data/DCI/UCI for any frequency/time/space resource (layer), it means as follows. For a DL, it may mean that a channel is estimated from a DMRS by using a QCL type and a QCL RS indicated by a corresponding TCI state in that frequency/time/-space resource (layer) and data/DCI is received/demodulated based on an estimated channel. In addition, for a UL, it may mean that a DMRS and data/UCI are transmitted/modulated by using a Tx beam and power indicated by a corresponding TCI state in that frequency/time/space resource.

Here, an UL TCI state has Tx beam and/or Tx power information of UE and may configure spatial relation information, etc. to UE through other parameter, instead of a TCI state. An UL TCI state may be directly indicated by UL grant DCI or may mean spatial relation information of a SRS resource indicated by a SRI (sounding resource indicator) field of UL grant DCI. Alternatively, it may mean an open loop (OL) Tx power control parameter connected to a value indicated by a SRI field of UL grant DCI (e.g., j: an index for open loop parameter Po and alpha (up to 32 parameter value sets per cell), q_d: an index of a DL RS resource for PL (pathloss) measurement (up to 4 measurements per cell), l: a closed loop power control process index (up to 2 processes per cell)).

Hereinafter, MTRP eMBB is described.

In the present disclosure, MTRP-eMBB means that multiple TRPs transmit different data (e.g., a different TB) by using a different layer/time/frequency. UE configured with a MTRP-eMBB transmission method receives an indication on multiple TCI states through DCI and assumes that data received by using a QCL RS of each TCI state is different data.

On the other hand, UE may figure out whether of MTRP URLLC transmission/reception or MTRP eMBB transmission/reception by separately dividing a RNTI for MTRP-URLLC and a RNTI for MTRP-eMBB and using them. In other words, when CRC masking of DCI is performed by using a RNTI for URLLC, UE considers it as URLLC transmission and when CRC masking of DCI is performed by using a RNTI for eMBB, UE considers it as eMBB transmission. Alternatively, a base station may configure MTRP URLLC transmission/reception or TRP eMBB transmission/reception to UE through other new signaling.

In a description of the present disclosure, it is described by assuming cooperative transmission/reception between 2 TRPs for convenience of a description, but a method proposed in the present disclosure may be also extended and applied in 3 or more multiple TRP environments and in addition, it may be also extended and applied in multiple panel environments (i.e., by matching a TRP to a panel). In addition, a different TRP may be recognized as a different TCI state to UE. Accordingly, when UE receives/transmits data/DCI/UCI by using TCI state 1, it means that data/DCI/UCI is received/transmitted from/to a TRP 1.

Hereinafter, methods proposed in the present disclosure may be utilized in a situation that MTRPs cooperatively transmit a PDCCH (repetitively transmit or partitively transmit the same PDCCH). In addition, methods proposed in the present disclosure may be also utilized in a situation that MTRPs cooperatively transmit a PDSCH or cooperatively receive a PUSCH/a PUCCH.

In addition, in the present disclosure, when a plurality of base stations (i.e., MTRPs) repetitively transmit the same PDCCH, it may mean the same DCI is transmitted through multiple PDCCH candidates and it may also mean that a plurality of base stations repetitively transmit the same DCI. Here, the same DCI may mean two DCI with the same DCI format/size/payload. Alternatively, although two DCI has a different payload, it may be considered the same DCI when a scheduling result is the same. For example, a TDRA (time domain resource allocation) field of DCI relatively determines a slot/symbol position of data and a slot/symbol position of A/N(ACK/NACK) based on a reception occasion of DCI, so if DCI received at n occasions and DCI received at n+1 occasions inform UE of the same scheduling result, a TDRA field of two DCI is different and consequentially, a DCI payload is different. R, the number of repetitions, may be directly indicated or mutually promised by a base station to UE. Alternatively, although a payload of two DCI is different and a scheduling result is not the same, it may be considered the same DCI when a scheduling result of one DCI is a subset of a scheduling result of the other DCI. For example, when the same data is repetitively transmitted N times through TDM, DCI 1 received before first data indicates N data repetitions and DCI 2 received after first data and before second data indicates N-1 data repetitions. Scheduling data of DCI 2 becomes a subset of scheduling data of DCI 1 and two DCI is scheduling for the same data, so in this case, it may be considered the same DCI.

In addition, in the present disclosure, when a plurality of base stations (i.e., MTRPs) partitively transmit the same PDCCH, it means that one DCI is transmitted through one PDCCH candidate, but TRP 1 transmits some resources that such a PDCCH candidate is defined and TRP 2 transmits the remaining resources. For example, when a PDCCH candidate corresponding to aggregation level m1+m2 is partitively transmitted by TRP 1 and TRP 2, a PDCCH candidate may be divided into PDCCH candidate 1 corresponding to aggregation level m1 and PDCCH candidate 2 corresponding to aggregation level m2, and TRP 1 may transmit PDCCH candidate 1 and TRP 2 may transmit PDCCH candidate 2 to a different time/frequency resource. After receiving PDCCH candidate 1 and PDCCH candidate 2, UE may generate a PDCCH candidate corresponding to aggregation level m1+m2 and try DCI decoding.

In addition, in the present disclosure, when UE repetitively transmits the same PUSCH so that a plurality of base stations (i.e., MTRPs) can receive it, it may mean that UE transmitted the same data through multiple PUSCHs. In this case, each PUSCH may be optimized and transmitted to an UL channel of a different TRP. For example, when UE repetitively transmits the same data through PUSCH 1 and 2, PUSCH 1 is transmitted by using UL TCI state 1 for TRP 1 and in this case, link adaptation such as a precoder/MCS, etc. may be also scheduled/applied to a value optimized for a channel of TRP 1. PUSCH 2 is transmitted by using UL TCI state 2 for TRP 2 and link adaptation such as a precoder/MCS, etc. may be also scheduled/applied to a value optimized for a channel of TRP 2. In this case, PUSCH 1 and 2 which are repetitively transmitted may be transmitted at a different time to be TDM, FDM or SDM.

In addition, in the present disclosure, when UE partitively transmits the same PUSCH so that a plurality of base stations (i.e., MTRPs) can receive it, it may mean that UE transmits one data through one PUSCH, but it divides resources allocated to that PUSCH, optimizes them for an UL channel of a different TRP and transmits them. For example, when UE transmits the same data through 10 symbol PUSCHs, data is transmitted by using UL TCI state 1 for TRP 1 in 5 previous symbols and in this case, link adaptation such as a precoder/MCS, etc. may be also scheduled/applied to a value optimized for a channel of TRP 1. The remaining data is transmitted by using UL TCI state 2 for TRP 2 in the remaining 5 symbols and in this case, link adaptation such as a precoder/MCS, etc. may be also scheduled/applied to a value optimized for a channel of TRP 2. In the example, transmission for TRP 1 and transmission for TRP 2 are TDM-ed by dividing one PUSCH into time resources, but it may be transmitted by a FDM/SDM method.

In addition, similarly to the above-described PUSCH transmission, also for a PUCCH, UE may repetitively transmit the same PUCCH or may partitively transmit the same PUCCH so that a plurality of base stations (i.e., MTRPs) receive it.

Hereinafter, a proposal of the present disclosure may be extended and applied to a variety of channels such as a PUSCH/a PUCCH/a PDSCH/a PDCCH, etc.

A proposal of the present disclosure may be extended and applied to both a case in which various uplink/downlink channels are repetitively transmitted to a different time/frequency/space resource and a case in which various uplink/-downlink channels are partitively transmitted to a different time/frequency/space resource.

In the present disclosure, a transmission occasion (TO) may correspond to a resource unit in which a channel is transmitted/received or a candidate resource unit in which a channel may be transmitted/received. For example, when multiple channels are transmitted in the TDM scheme, TO may mean each channel that is or may be transmitted in different time resources. For example, when multiple channels are transmitted in the FDM scheme, TO may mean each channel that is or may be transmitted in different frequency resources (e.g., RBs). For example, when multiple channels are transmitted in the SDM scheme, TO may mean each channel that is or may be transmitted in different layers/beams/DMRS ports. One TCI state may be mapped to each TO. When the same channel is repeatedly transmitted, a complete DCI/data/UCI may be transmitted in one TO, and the receiving end may receive multiple TOs to increase the reception success rate.

The above-described single DCI (S-DCI)-based multi-TB PUSCH/PDSCH scheduling scheme may be applied, for example, to a case that one DCI simultaneously schedules a plurality of PUSCH/PDSCHs in a very high frequency band (e.g., band above 5.26 GHz). For example, multiple time-domain resource allocations (TDRAs) (or TOs) may be indicated at once through a TDRA field of DCI for scheduling PUSCH, and different TBs may be transmitted through a PUSCH in each TO. Frequency domain resource allocation (FDRA), MCS, transmit precoding matrix indicator (TPMI), SRI values of Multi-TB PUSCH scheduling DCI may be commonly applied to a plurality of TBs scheduled by the corresponding DCI. In addition, NDI, RV may be individually/independently indicated for each TB through the multi-TB PUSCH scheduling DCI. In addition, in such multi-TB PUSCH scheduling DCI, one value is indicated for the HARQ (process) number (HPN), but values sequentially increasing in the TO order from the initial TO may be applied.

14

Additionally, a S-DCI based M-TRP PUSCH repetition transmission scheme may be considered. In this regard, the base station configures two SRS sets to the terminal for S-DCI-based M-TRP PUSCH transmission, and each set is used to indicate a UL Tx port for/to TRP 1 and TRP 2, and a UL beam /QCL information. In addition, the base station performs SRS resource indication for each SRS resource set and may indicate up to two PC parameter sets, through two SRI fields included in one DCI.

For example, the first SRI field may indicate the SRS resource and PC parameter set defined in SRS resource set 0, and the second SRI field may indicate the SRS resource and PC parameter set defined in SRS resource set 1. The terminal may receive an indication of the UL Tx port, PC parameter set, and UL beam/QCL information for TRP 1 through the first SRI field, and, through this, the terminal performs PUSCH transmission in TO corresponding to SRS resource set 0. Similarly, the terminal may receive an indication of the UL Tx port, PC parameter set, and UL beam/QCL information for TRP 2 through the second SRI field, and through this, the terminal may perform PUSCH transmission in TO corresponding to SRS resource set 1.

In addition to the above-described SRI field, an existing one field may be extended to two fields so that TPMI, PTRS, and TPC-related fields may be indicated for each TRP.

Additionally, an SRS resource set indication field (e.g., a 2-bit field) may be defined, and based on this, the terminal may perform the S-TRP PUSCH repetition transmission by selecting a specific one of the two SRS resource sets, or may perform M-TRP PUSCH repetition transmission by selecting both SRS resource sets.

For example, codepoint "00" of the SRS resource set indication field may indicate the first SRS resource set, and codepoint "01" may indicate the second SRS resource set/definition. When codepoint "00" or "01" is indicated, S-TRP PUSCH transmission corresponding to the SRS resource set indicated by each codepoint may be performed. In addition, codepoint "10" may be configured/defined to indicate [first SRS resource set, second SRS resource set], and codepoint "11" may be configured/defined to indicate [second SRS resource set, first SRS resource set]. When codepoint "10" or "11" is indicated, M-TRP PUSCH transmission may be performed in the order in which SRS resource set pairs are indicated. When codepoint "10" is indicated, the first SRS resource set corresponds to the first PUSCH TO, and when codepoint "11" is indicated, the second SRS resource set corresponds to the first PUSCH TO.

Additionally, a single PUCCH resource-based M-TRP repetition PUCCH transmission scheme may be considered. In this regard, for single PUCCH resource-based M-TRP PUCCH transmission, the base station may activate/configure two spatial relation info on a single PUCCH resource to the terminal (if FR1, two PC parameter sets may be activated/configured). When UL UCI is transmitted through a corresponding PUCCH resource, each spatial relation info is used to indicate spatial relation info toward TRP 1 and TRP 2 to the terminal, respectively. For example, through the value indicated in the first spatial relation info, the terminal is indicated with Tx beam/PC parameter(s) toward TRP 1, and the terminal performs PUCCH transmission in the TO corresponding to TRP 1 by using the corresponding information. Similarly, through the value indicated in the second spatial relation info, the terminal is indicated the Tx beam/PC parameter(s) toward TRP 2, and the terminal performs PUCCH transmission in the TO corresponding to TRP 2 by using the corresponding information.

In addition, for M-TRP PUCCH repetition transmission, a configuration method has been improved so that two spatial relation info may be configured in a PUCCH resource. That is, when power control (PC) parameters such as PLRS, Alpha, P0, and closed loop index are set/configured for each spatial relation info, spatial relation RS may be configured. As a result, PC information and spatial relation RS information corresponding to the two TRPs may be configured through the two spatial relation info. Through this, the terminal transmits the UCI (i.e., CSI, ACK/NACK, SR, etc.) PUCCH by using the first spatial relation info in the first TO, and transmits the same UCI PUCCH by using the second spatial relation info in the second TO. In the present disclosure, a PUCCH resource configured with two spatial relation info may be referred to as an M-TRP PUCCH resource, and a PUCCH resource configured with one spatial relation info may be referred to as an S-TRP PUCCH resource.

Additionally, with respect to the proposal of the present disclosure, a unified TCI framework scheme may be considered. That is, the UL TCI state as well as the DL TCI state may be indicated together through the DL DCI (e.g., DCI format 1_1/1_2, etc.). Alternatively, only the UL TCI state may be indicated without indicating the DL TCI state through the DL DCI. Through this, schemes conventionally used for UL beam and power control (PC) configuration may be replaced through the above-described UL TCI state indication scheme.

As a specific example, one UL TCI state may be indicated through a TCI field in DL DCI. In this case, the UL TCI state may be applied to all PUSCH/PUCCHs after a certain time (e.g., beam application time), and may be applied to some or all of the indicated SRS resource sets. Alternatively, multiple UL TCI states (and/or DL TCI states) may be indicated through the TCI field in the DL DCI.

New methods in which a terminal simultaneously transmits several channels (CH)/reference signals (RSs) of the same type, the terminal simultaneously transmits several CHs/RSs of different types are being discussed. In the conventional scheme, the operation of the terminal transmitting a plurality of CHs/RSs in one time point (or in one time unit) is restricted. For example, for a terminal according to the conventional scheme, simultaneous transmission of a plurality of SRS resources belonging to different SRS resource sets is supported for uplink beam measurement, but simultaneous transmission of a plurality of different PUSCHs is not supported. Therefore, in order to support a more advanced terminal operation by alleviating the above restrictions, a method for simultaneously transmitting a plurality of CHs/RSs using a plurality of transmission elements of one terminal is being discussed.

For example, according to the present disclosure, a terminal may simultaneously perform uplink transmissions for multiple transmission targets using multiple transmission elements. In addition, the base station may simultaneously receive the uplink transmissions transmitted through the multiple transmission elements from the terminal in the multiple transmission targets. For example, a transmission element of the terminal may correspond to an antenna group or an antenna panel, and one antenna group/panel may correspond to one RS set (or one RS candidate set). That is, the antenna group/panel may be indicated/identified by the RS (candidate) set. For example, the transmission target of uplink transmission from the terminal may correspond to a TRP or a cell, and one TRP/cell may correspond to one CORESET group/pool. That is, the TRP/cell may be indicated/identified by the CORESET group/pool. For example, a simultaneous uplink transmission scheme for multiple transmission targets through multiple transmission elements may be referred to as simultaneous transmission across multi-panel (STxMP). However, the scope of the present disclosure is not limited by the name of the transmission scheme, the examples of the unit of the transmission element, and/or the examples of the unit of the transmission target.

As one example of STxMP operation, two PUSCHs corresponding to two UL TBs (e.g., a first PUSCH carrying a first TB, a second PUSCH carrying a second TB) may be scheduled on the same RE. In addition, an individual TCI state may be configured/indicated for each of a plurality of PUSCH transmissions. A plurality of TCI states may correspond to a plurality of transmission elements (e.g., a panel/RS set), respectively. In addition, one transmission element may correspond to one transmission target, respectively, and a plurality of transmission elements may correspond to one transmission target.

For example, a first spatial relation RS and a first power control (PC) parameter set (or a first UL TCI state) may be configured/indicated for a first PUSCH transmission, and a second spatial relation RS and a second PC parameter set (or a second UL TCI state) may be configured/indicated for a second PUSCH transmission. For example, the terminal may transmit a first PUSCH using a first panel corresponding to a first UL TCI state in a first time unit, and may transmit a second PUSCH using a second panel corresponding to a second UL TCI state in the first time unit. For example, the terminal may transmit (for the first CORESET pool) the first PUSCH through the first RS set based on the first UL TCI state in the first time unit, and may transmit the second PUSCH (for the second CORESET pool) through the second RS set based on the second UL TCI in the first time unit. A time unit may correspond to at least one of a symbol, a symbol group, a slot, or a slot group.

In this regard, when performing PUSCH scheduling through DCI, the base station may indicate whether to transmit the corresponding PUSCH through STxMP, single panel, or M-TRP repetition PUSCH. In this case, the terminal needs to have STxMP-related capabilities, and the STxMP mode needs to be enabled in advance through higher layer signaling (e.g., RRC signaling, etc.). For the indication, an existing SRS resource set indication field may be redefined and used, or a new DCI field may be introduced/defined.

In the present disclosure, when certain information is defined between a terminal and a base station, it may mean that a terminal and a base station know corresponding information without separate signaling between a terminal and a base station; when it is configured between a terminal and a base station, it may mean that corresponding information is transmitted/received through higher layer (e.g., RRC) signaling between a terminal and a base station; and when it is indicated between a terminal and a base station, it may mean that corresponding information is transmitted/received through lower layer (e.g., L1 (e.g., DCI/UCI), L2 (e.g., MAC-CE)) signaling.

CSI Improvement

The present disclosure relates to a CSI improvement method that may be applied to a high-speed terminal. For example, various examples for applying a time domain compression window to a PMI included in CSI are described below.

In the existing wireless communication system, a codebook related to a PMI (e.g., a type II codebook) may support compressing PMIs for a plurality of sub-bands in a frequency domain and reporting them as one codebook. The present disclosure describes a method for compressing PMIs for a plurality of time units in a time domain and reporting them as one codebook (i.e., including them in one CSI report).

For example, the present disclosure may include specific examples for the number of time units (or time instances), the interval of time units, a position of a CSI reference resource, a window (or a duration) of a time unit, etc. The present disclosure may include examples for a codebook parameter including a time domain-based coefficient, a granularity, etc. The present disclosure may include examples for a relationship between a time unit and a measurement restriction for a channel measurement resource(CMR)/an interference measurement resource(IMR). The present disclosure may include examples for the criteria of a time unit offset.

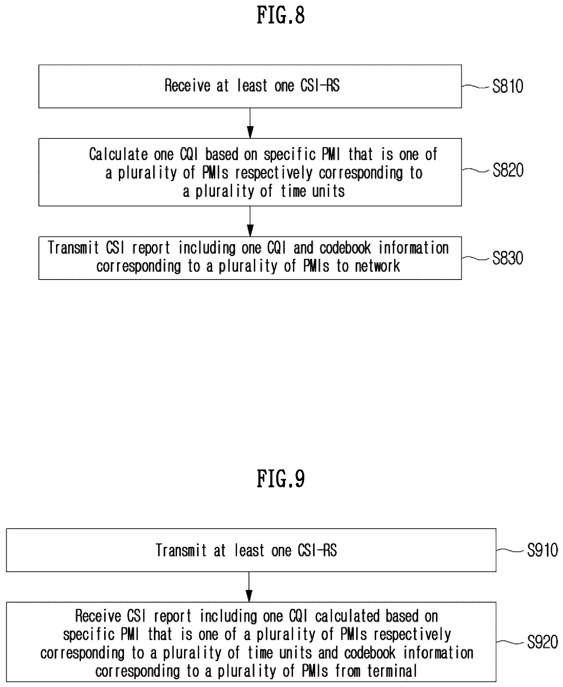

FIG. 8 is a diagram for describing an example of a CSI report transmission method of a terminal according to the present disclosure.

In S810, a terminal may receive at least one CSI-RS from a network.

In S820, a terminal may calculate one CQI based on a specific PMI which is one of a plurality of PMIs corresponding to each of a plurality of time units.

In the following description, a term PMI may be replaced with a precoding matrix indicated by a PMI or may include such a meaning.

One CQI may be associated with a specific time unit which is one of a plurality of time units. In addition, one CQI may be associated with a specific PMI among a plurality of PMIs. For example, a terminal may be configured to report at least one CQI, and one of those CQIs may be associated with a specific time unit/a specific PMI.

For example, a specific time unit may correspond to the first or earliest time unit among a plurality of time units within a configured window.

For example, a specific time unit may correspond to a CSI reference resource.

For example, the first time unit among the plurality of time units within a configured window may correspond to a CSI reference resource.

For example, a specific PMI may be the first/earliest PMI (or a matrix indicated by a PMI) corresponding to a specific time unit (e.g., the first/earliest time unit).

For example, a specific time unit may correspond to a time unit separated by a specific offset from a time unit that CSI report is transmitted (e.g., a CSI report instance).

For example, the duration of one time unit may be the same as a CSI-RS period. In addition, a plurality of time units may have the same time duration. In other words, the duration of the first time unit and the duration of the second time unit may be the same. Accordingly, a plurality of time instances may be positioned at the same interval in a time domain.

In S830, a terminal may transmit CSI report including codebook information corresponding to a plurality of PMIs and one CQI to a network.

Codebook information corresponding to a plurality of PMIs may include a codebook index (or a combination of a plurality of codebook indexes) corresponding to each of a plurality of PMIs.

CSI report may also further include other information in addition to one CQI and codebook information. CSI report may be transmitted through one report instance or may be transmitted through a plurality of report instances (i.e., information included in one CSI report may be transmitted through a different time point/channel).

FIG. 9 is a diagram for describing an example of a CSI report reception method of a base station according to the present disclosure.

In S910, a base station may transmit at least one CSI-RS to a terminal.

In S920, a base station may receive CSI report including codebook information corresponding to one CQI and a plurality of PMIs from a terminal. A CQI may be calculated based on a specific PMI which is one of a plurality of PMIs corresponding to a plurality of time units, respectively.

Here, specific examples for one CQI, a plurality of PMIs and a time unit corresponding to a plurality of PMIs respectively are the same as those described with reference to FIG. 8, so an overlapping description is omitted.

Hereinafter, specific examples related to CSI report including codebook information for a plurality of PMIs corresponding to a plurality of time units according to the present disclosure are described.

The following examples may be applied, for example, to possible CSI improvement for high/medium terminal speed. However, it does not limit the application target of the present disclosure, and the examples of the present disclosure may be applied for various purposes for more accurate and efficient CSI report.

For high/medium terminal speed, the aspect of Type II codebook improvement may be considered, and a terminal's report for time domain channel properties such as doppler shift or doppler spread through a TRS may also be considered. These considerations may help a base station (e.g., gNB) perform better link level adaptation for a time varying channel due to the high mobility of a terminal.

In particular, Improved type II codebook including time domain compression may provide a base station with precoding information for a plurality of time instances (or time units) instead of a single time instance (or time unit) that is vulnerable to channel aging. Accordingly, a base station may predict a time varying channel direction and schedule better MCS and precoders. Meanwhile, in addition to the existing CSI, through the calculation and report of doppler information through a TRS, a terminal may help a base station compensate for outdated CSI by using doppler information. Accordingly, a base station may predict a time varying channel direction and schedule better MCS and precoders.

In the examples of the present disclosure, channel measurement, time instances (or time units) represented by a new codebook, a time domain basis (TD basis), etc. for type II codebook improvement are described.

First, channel measurement for type II codebook improvement is described.

Type II codebook improvement including time domain (TD) compression may require a plurality of channel measurements on a terminal side. In an operation where a terminal performs a plurality of channel measurements, a time domain channel/interference measurement restriction of a terminal may be enabled/disabled by a base station.

When enabled, a terminal may measure the latest CMR/IMR no later than a CSI reference resource. Accordingly, single measurement may be used to estimate a channel in a CSI reference resource.

When disabled, a terminal may measure a plurality of CMR/IMR instances no later than a CSI reference resource. How to use a plurality of measurements to estimate a channel in a CSI reference resource may be performed in various ways according to the implementation of a terminal. In this way, for an unrestricted measurement configuration (i.e., a restriction is disabled), a terminal may use a plurality of measurements to calculate CSI. When codebook improvement including TD compression is introduced, a terminal may need an unrestricted measurement configuration to calculate a PMI for a plurality of time instances.

In other words, for type II codebook improvement including TD compression, a plurality of channel measurements may be required on a terminal side. In addition, when a time restriction for channel measurement (e.g., a timeRestrictionForChannelMeasurements parameter) is not configured, a terminal may use a plurality of channel/interference measurements to calculate CSI including an improved codebook based on TD compression. In addition, when a time restriction (e.g., a timeRestrictionForChannelMeasurements parameter) is configured, a terminal uses a single channel/interference measurement to calculate CSI, so an improved codebook including TD compression may not be used.

Whether a plurality of channel measurements are possible depends not only on a time domain measurement restriction described above, but also on the periodicity of a CMR/an IMR. For an aperiodic (AP) CMR/IMR, only one CMR/IMR without periodicity exists, so only single measurement is possible. A periodic(P)/semi-static(SP) CMR/IMR provides a plurality of opportunities for channel/interference measurement to a terminal. For example, if it is assumed that the minimum period is 4 slots, it is necessary to examine whether a sufficiently frequent measurement instance is provided to a high-speed terminal. If a measurement instance is too sparse, PMI accuracy may be degraded and the quality of TD compression may be lowered. Alternatively, if a measurement instance is too dense, a CSI-RS overhead may increase.

In other words, for an AP CMR/IMR, only one CMR/IMR without periodicity exists, so only single measurement is possible. In order for a P/SP CSI-RS to provide a sufficient measurement time instance for an improved type II codebook including TD compression, a method for defining/configuring/indicating a plurality of time instances (or time units) is described below through the specific examples of the present disclosure.

Next, a plurality of time instances (or time units) represented by an improved type II codebook including TD compression are described.

Similar to the existing type II codebook including frequency domain (FD) compression representing a plurality of PMIs for a plurality of sub-bands, a new type II codebook including TD compression may represent a plurality of PMIs for a plurality of time instances (or time units). Here, it is required to determine/define a plurality of time instances.

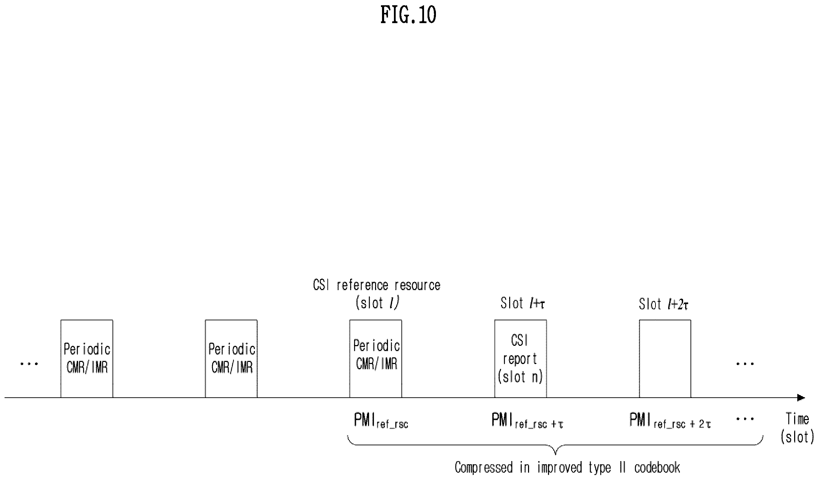

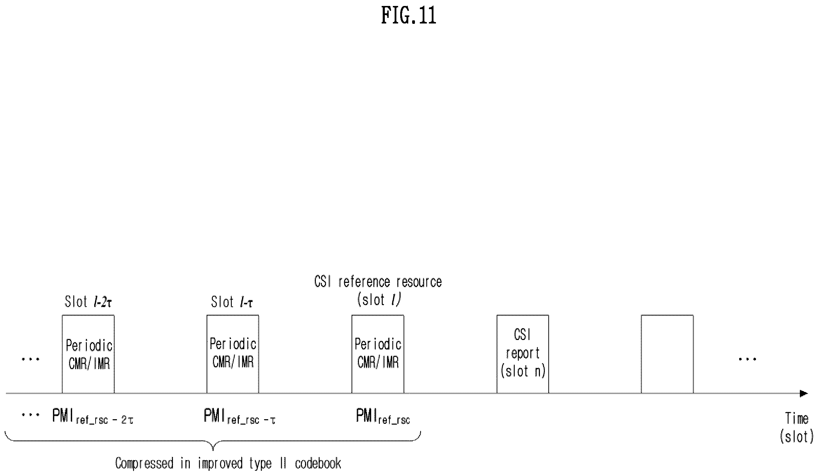

FIGS. 10 and 11 are a diagram for describing the examples of a CSI reference resource and a CSI report time unit according to the present disclosure.

CSI including a PMI/a RI/a CQI may represent a channel for a single time instance referred to as a CSI reference resource. In other words, a single CQI included in CSI may be calculated based on one PMI among a plurality of PMIs corresponding to a plurality of time units. For example, one time unit and one PMI associated with one CQI mayn be one first/earliest time unit and one first/earliest PMI corresponding thereto in an example of FIG. 10. Alternatively, one time unit and one PMI associated with one CQI may be one last time unit and one last PMI (e.g., the third one for three PMIs) corresponding thereto in an example of FIG. 11.

A type II codebook including TD compression may provide a PMI for another time instance (e.g., a slot/a symbol) as well as a PMI for a CSI reference resource. These time instances may be defined later or earlier in a time domain compared to a CSI reference resource.

An example of FIG. 10 shows PMIs for a plurality of time units no earlier than a CSI reference resource.

A terminal may calculate $PMI_{ref\_rsc}$ based on a CSI reference resource, which may be derived from periodic CMR(s) no later than a CSI reference resource. A terminal may calculate $PMI_{ref\_rsc+\tau}$ based on a resource later than a CSI reference resource by $\tau$ time units and calculate $PMI_{ref\_rsc+2\tau}$ based on a resource later than a CSI reference resource by $2\tau$ time units, which may be predicted from periodic CMR(s) no later than a CSI reference resource. For example, when it is assumed that a CSI reference resource is positioned in slot $l$, a terminal may calculate $PMI_{ref\_rsc+\tau}$, based on a DL channel in slot $l+\tau$ and $PMI_{ref\_rsc+2\tau}$, ... based on a DL channel in slot $l+2\tau$.

Accordingly, $PMI_{ref\_rsc}$, $PMI_{ref\_rsc+\tau}$, $PMI_{ref\_rsc+2\tau}$,... may be compressed by using an improved type II codebook including TD compression, reducing a PMI feedback overhead. Since a terminal is required to predict a DL channel at a time point after a CSI reference resource, a codebook including PMIs at a future time point compared to a CSI report time point (e.g., slot n) may be robust to channel aging and used by a base station for better link adaptation.

An example of FIG. 11 shows PMIs for a plurality of time units no later than a CSI reference resource.

A terminal may calculate $PMI_{ref\_rsc}$ based on a CSI reference resource, which may be derived from periodic CMR(s) no later than a CSI reference resource. A terminal may calculate $PMI_{ref\_rsc-\tau}$ based on a resource earlier than a CSI reference resource by $\tau$ time units and calculate $PMI_{ref\_rsc-2\tau}$ based on a resource earlier than a CSI reference resource by $2\tau$ time units, which may be predicted from periodic CMR(s) no later than a CSI reference resource. For example, when it is assumed that a CSI reference resource is positioned in slot $l$, a terminal may calculate $PMI_{ref\_rsc-\tau}$, based on a DL channel in slot $l-\tau$ and $PMI_{ref\_rsc-2\tau}$, ... based on a DL channel in slot $l-2\tau$.

An example of FIG. 11 shows that there is a periodic CMR in a CSI reference resource, a CSI reference resource - $\tau$ and a CSI reference resource - $2\tau$. In other words, in an example of FIG. 11, an interval of a plurality of time units corresponding to each of a plurality of PMIs is the same as $\tau$ and $\tau$ may be the same as a period of a periodic CMR (e.g., a P/SP-CSI-RS). In addition, the examples of FIG. 10 also show that an interval of a plurality of time units corresponding to each of a plurality of PMIs is the same as $\tau$ and $\tau$ may be the same as a period of a periodic CMR (e.g., a P/SP-CSI-RS).

Accordingly, $PMI_{ref\_rsc}$, $PMI_{ref\_rsc-\tau}$, $PMI_{ref\_rsc-2\tau}$,... may be compressed by using an improved type II codebook including TD compression, reducing a PMI feedback overhead. Since a terminal is not required to predict a DL channel, a codebook including PMIs at a past time point compared to a CSI report time point (e.g., slot n) may have lower complexity of a terminal operation compared to an example of FIG. 10. Since $PMI_{ref\_rsc-\tau}$, $PMI_{ref\_rsc-2\tau}$,... are staler than $PMI_{ref\_rsc}$, it may be difficult for a base station to use them for better link adaptation or obtain potential gains.

In other words, as in an example of FIG. 10 and/or FIG. 11, a plurality of time instances represented by an improved type II codebook positioned before and/or after a CSI reference resource in a time domain may be defined/-configured.

Next, a TD basis for type II codebook improvement is described.

As described by referring to FIGS. 10 and 11, in order to cope with channel aging effects due to high mobility, a terminal may calculate a plurality of PMIs for a plurality of time instances. As the number of time instances associated with a PMI increases, a PMI feedback payload may increase linearly. Even when it is assumed that a plurality of PMIs share the same spatial domain (SD) basis and/or frequency domain (FD) basis, a different coefficient value must be at least reported for each PMI, which may occupy the dominant portion of a payload.

Accordingly, time domain compression using a TD basis for coefficient values may have an advantageous effect for feedback overhead reduction. When the existing type II codebook where a SD basis and a FD basis are independently selected based on a DFT matrix is considered, a TD basis may also be selected independently from a SD basis and/or a FD basis.

Alternatively, since the beam direction of each SD basis may be completely/partially aligned with or against the moving direction of a terminal, each SD basis may experience a different level of time varying channel. Considering this, if a different TD basis may be selected for a different SD basis, codebook accuracy may be improved.

In other words, a TD basis may be defined/configured by comprehensively considering an aspect that a feedback overhead is reduced by using TD compression and a performance gain when SD basis/FD basis specific TD basis selection is applied.

Embodiment 1

In examples described by referring to FIGS. 10 and 11, the time instance(s) (e.g., CSI report window) of a channel represented by PMI(s) may be defined/configured as follows.

For example, information about the length of a CSI report window, the number of time instances (or time units) within a window, an interval between time instances, etc. may be predefined without signaling between a terminal and a base station or may be configured to a terminal by signaling from a base station. It is described below by assuming an example in which a window of time instance(s) of a channel represented by PMI(s) is configured to a terminal by a base station, but the examples of the present disclosure may also be applied to time instance(s) that are predefined (or defined as a default value) without signaling from a base station.

For example, a base station may signal the window of time instances to a terminal through a parameter included in RRC signaling for a codebook configuration.

The number of time instances that will be represented by a PMI (i.e., information about the number of time instances within a window) may be configured/indicated to a terminal. In an example of FIGS. 10 and 11, it may be assumed that the number of time instances is 3. The number of time instances may be configured by considering the time-varying nature of a channel, and for this purpose, a terminal may report its own speed information, doppler information (e.g., doppler shift/doppler spread), etc. to a base station. Alternatively, a terminal may report the preferred number of time instances to a base station based on its own speed or doppler information, and a base station may approve or consider it, select a time instance number value which will be finally applied and inform it to a terminal. Additionally or alternatively, a terminal may report candidate values for a time instance number value to a network as capability information.

Information about an interval between time instances (i.e., $\tau$ in an example of FIGS. 10 and 11) may be configured/indicated to a terminal. The value of $\tau$ may be configured by considering the time-varying nature of a channel, and for this purpose, a terminal may report its own speed information, doppler information (e.g., doppler shift/doppler spread), etc. to a base station. Alternatively, a terminal may report the preferred value of $\tau$ to a base station based on its own speed or doppler information, and a base station may approve or consider it, select the value of $\tau$ which will be finally applied and inform it to a terminal. For example, the value of $\tau$ may be represented by an absolute time length, the number of slots, the number of OFDM symbols, etc. In addition, a terminal may report candidate values for the value of $\tau$ to a network as capability information.

Additionally or alternatively, as in examples described above, an interval between time instances may be configured to be the same as a periodic CMR (or an interval or a period between P/SP-CSI-RSs). In addition, an interval between time instances may also be referred to as the duration of each time instance. In other words, information about an interval between time instances or the duration of a time instance may be separately configured/indicated to a terminal or the same value as a period provided by a specific CSI-RS configuration may be configured/indicated to a terminal.

The order of a CSI reference resource among the time instances may be configured/indicated to a terminal.

In an example of FIG. 10, the first/earliest time instance may correspond to a CSI reference resource. An example of FIG. 10 may correspond to a case in which an offset between a CSI reference resource and a time instance is 0. For example, a base station may configure/indicate to a terminal information about an offset between a CSI reference resource and a time instance. When a CSI reference resource corresponds to the first/earliest time instance, at least one remaining time instance may be positioned after a CSI reference resource on a time domain. In addition, as described above, when a CSI reference resource corresponds to the first/earliest time unit (e.g., slot) within a window, a single CQI may be associated with one first/earliest time unit and one (i.e., first/earliest) PMI corresponding thereto.

In an example of FIG. 11, the last time instance may correspond to a CSI reference resource. An example of FIG. 11 may correspond to a case in which an offset between a CSI reference resource and a time instance is 2 (or $2\tau$). For example, a base station may configure/indicate to a terminal information about an offset between a CSI reference resource and a time instance. When a CSI reference resource corresponds to the last time instance, at least one remaining time instance may be positioned before a CSI reference resource on a time domain. In addition, as described above, when a CSI reference resource corresponds to the last time unit (e.g., slot) within a window, a single CQI may be associated with one last time unit and one PMI corresponding thereto (e.g., the third of three PMIs).

In examples described above, an offset for a time instance (i.e., a time domain interval with a CSI reference resource) may be configured by considering the time-varying nature of a channel, and for this purpose, a terminal may report its own speed information, doppler information (e.g., doppler shift/doppler spread), etc. to a base station. Alternatively, a terminal may report a preferred time instance offset to a base station based on its own speed or doppler information, and a base station may approve or consider it, select a time instance offset which will be finally applied and inform it to a terminal.

For example, a capability related to a time instance offset that a CSI reference resource may be configured as the last time instance within a window (as in FIG. 11) and a capability related to a time instance offset that a CSI reference resource may be configured as the first time instance within a window (as in FIG. 10) may be defined. In other words, some terminals may support only the former capability, others may support only the latter capability and others may support both the former and the latter capabilities. These terminal capabilities may be reported to a network. The former capability does not require channel prediction, so terminal implementation is simple, while the latter capability requires channel prediction, so terminal implementation may be complex. Specifically, for the latter case, a terminal may additionally report to a network the minimum value of a time instance offset that is configurable (i.e., related to the prediction performance of a terminal) or candidate(s) of a time instance offset value that is configurable (i.e., related to the prediction performance of a terminal). For example, as the minimum value of a time instance offset is smaller, more predictions must be performed, which may increase the terminal implementation complexity.

In examples described above, the position (e.g., grid) of time instances on a time domain may be defined/configured by the number and interval of time instances, and a slot/a symbol at which the grid of a corresponding time instance is positioned may be defined/determined by a time instance offset for a CSI reference resource.

Additionally or alternatively, the position (e.g., grids) of time instances on a time domain may be defined/configured by defining/configuring the length of a window of a time instance as the number of time units (e.g., slots/symbols) and defining/configuring the number of time instances within a corresponding window. In other words, time instances separated at the same interval as the number of time instances within a window may be determined. Alternatively, time instances having the same duration within a window may be determined. For example, when the length of a window is defined as 3 slots and the number of time instances is 3, a time instance grid may be represented as 3 consecutive slots. In other words, the duration of each time instance may be 1 slot.

In this case, when a time instance offset value is given as 0, final time instances may be determined as slot index $l$, slot index $l+1$ and slot index $l+2$ corresponding to a CSI reference resource slot.

In examples described above, it corresponds to a case in which time instances are configured at the same interval (or the duration of each time instance is the same). Additionally or alternatively, when the time-varying nature of a channel is different over time and is predictable, it may be inefficient to distribute time instances at the same interval (or the same duration). For example, when N time instances are configured, it is assumed that the time-varying nature of a channel is strong in front (i.e., early time) of the entire time duration represented by a PMI and the time-varying nature of a channel is weak in back (i.e., late time) of the entire time duration. In this case, time instances may be arranged more densely (i.e., with a narrow interval or a short duration) in front of the entire time duration and time instances may be arranged more sparsely (i.e., with a wide interval or a long duration) in back of the entire time duration. For example, when a CSI reference resource (slot $l$) is positioned in the first time instance, the second time instance may be positioned in slot $l+1$, the third time instance may be positioned in slot *l*+2 and the fourth time instance may be positioned in slot *l*+5. Accordingly, a compression ratio and accuracy for TD compression may be improved.

In this way, the interval of time instances within a window may be the same interval (or the same duration) or may not be the same interval (or a different duration). In this regard, a terminal may transmit information related to the position of a time instance to a network (along with CSI report). Alternatively, a base station may configure/indicate information related to the position of a time instance to a terminal. For example, a base station may provide a terminal with information related to the position of a time instance through UL scheduling DCI triggering AP CSI report.

Among the information/parameters related to a time instance as described above (e.g., a window length, the number of time instances within a window, an interval between time instances, a time instance duration, a time instance position, etc.), some parameters may be fixed (i.e., no signaling is required between a terminal and a base station) and the remaining parameters may be configured by a base station to a terminal or may be reported by a terminal to a base station.

The parameters of a TD-compressed codebook may be different according to a time instance configured as above. For example, as the number of time instances within the same window length is smaller or an interval between time instances (or the duration of a time instance) is larger or a window length is longer, TD compression must be performed for more time. A TD basis candidate suitable for these various cases may vary. For example, when a TD basis candidate is constructed based on a DFT matrix, a DFT matrix may be constructed as a function of the number of time instances or an interval between time instances. In addition, the granularity (or the configurable range of a granularity) of a coefficient (e.g., an amplitude, a phase) applied when a SD/FD/TD basis is linearly combined may also be adjusted. For example, when the number of time instances increases, the number of coefficients may increase, and in order to offset an overhead increase therefor, the granularity of a coefficient may increase and the number of candidate values that may be represented within the range of coefficient values may decrease. In addition, in a type II codebook, instead of reporting all coefficients, some coefficients may be configured as zero and only a value for non-zero coefficients may be reported. A configuration (or a configurable range) for the number of these zero coefficients may also vary depending on the number of time instances or a time interval between time instances.

A base station may provide a terminal with information on whether to configure time instances as a CSI reference resource and a resource (or a slot) positioned later in a time domain as in FIG. 10 or whether to configure time instances as a CSI reference resource and a resource (or a slot) positioned earlier in a time domain as in FIG. 11 through RRC signaling, etc.

In addition, a measurement restriction interval of a CMR/a IMR may be determined in relation to a PMI time instance. For example, when slot *l*, slot *l*-τ, and slot *l*-2τ are configured as time instances (or CSI report windows) represented by a PMI as in FIG. 11, there may be a restriction that a DL channel of slot *l* is measured by using a CMR/an IMR existing in slot *l* or before slot *l* and slot *l*-τ or after slot *l*-τ, there may be a restriction that a DL channel of slot *l*-τ is measured by using a CMR/an IMR existing in slot *l*-τ or before slot *l*-τ and slot *l*-2τ or after slot *l*-2τ, and there may be a restriction that a DL channel of slot *l*-2τ is measured by using a CMR/an IMR existing in slot *l*-2τ or before slot *l*-2τ and slot *l*-3τ or after slot *l*-3τ (or existing before slot *l*-2τ without any restriction on what time boundary it is after). Through this restriction, a base station may control the implementation of channel/interference measurement of a terminal for CSI calculation. As a result, a base station receives CSI calculated through implementation common from multiple terminals, and through this, a base station may unify a process of compensating CSI for a time-varying channel and calculating a PMI/a MCS, etc.

Embodiment 2

In examples described above, a time instance offset is described as a relative position to a CSI reference resource.

Additionally or alternatively, a time instance offset (or the position of a CSI reference resource included in a time offset) may be defined/configured based on a CSI report time point (e.g., slot n in FIGS. 10 and 11).

Additionally or alternatively, a time instance offset (or the position of a CSI reference resource included in a time offset) may be defined/configured based on the last time unit of a CSI measurement window (distinct from a CSI report window). A CSI measurement window may refer to a time interval (or time unit(s)) during which a channel/interference may be measured for CSI calculation and a CSI report window may refer to a time interval (or time unit(s)) corresponding to a channel that is represented by CSI.

In examples described above, a time instance offset may be configured as a negative value or a value greater than or equal to the number of time instances. When a time instance offset is configured as a relative position to a CSI reference resource, if a time instance offset is negative, time instances(s) may exist only at a future time point compared to a CSI reference resource. If a time instance offset is configured as a value greater than or equal to the number of time instances, time instances(s) may exist only at a past time point compared to a CSI reference resource.

The possible range of a time instance offset may be reported by a terminal to a base station (e.g., as capability information). A base station may also configure/indicate to a terminal a time instance offset value by considering report information from s terminal (e.g., within a range reported by a terminal).

A value for a variety of information/parameters provided to a terminal as described in examples described above may be configured/indicated through (with) the AP CSI report trigger field of an UL scheduling DCI for AP CSI report, through a parameter in a CSI-ReportConfig IE and/or through PMI codebook-related configuration information.

The maximum value of each of the number of time instances and a time instance interval may be reported by a terminal to a base station (e.g., as capability information). As the number of time instances or a time instance interval is larger, the amount of calculation required by a terminal for CSI calculation may increase. Accordingly, a terminal may report to a base station the maximum value of the number of time instances and/or a time instance interval that affects the amount of CSI calculation. A base station may configure/indicate the number of time instances and/or a time instance interval to a terminal by considering the maximum value reported from a terminal (e.g., within a range that does not exceed the maximum value).

Additionally or alternatively, a terminal may report information about a combination of the number of time instances and a time instance interval to a base station (e.g., as terminal capability information). For example, a terminal may separately report a combination of how many slots there are in the maximum interval when there are N1 time instances and a combination of how many slots there are in the maximum interval when there are N2 time instances. Alternatively, a terminal may separately report a combination of the number of time instances when the maximum interval is S1 slots and a combination of the number of time instances when the maximum interval is S2 slots. As the number of time instances increases, the maximum interval supported by a terminal may decrease (or as the maximum interval increases, the number of time instances may decrease), so this report method may be effective.

This report method may also be applied by replacing the interval of time instances described above with the length of a window of a time instance even when defining/configuring time instances by using the window of time instance(s) instead of the interval of time instances. For example, a terminal may report capability information about the length of a window and/or the number of time instances to a base station. A base station may also provide a terminal with configuration/indication information about the length of a window and/or the number of time instances. For example, when time instances have the same interval (or the same duration), the length of a window may be defined/configured as the product of the interval of time instances (or the duration of time instances) and the number of time instances.

General Device to which the Present Disclosure may be applied

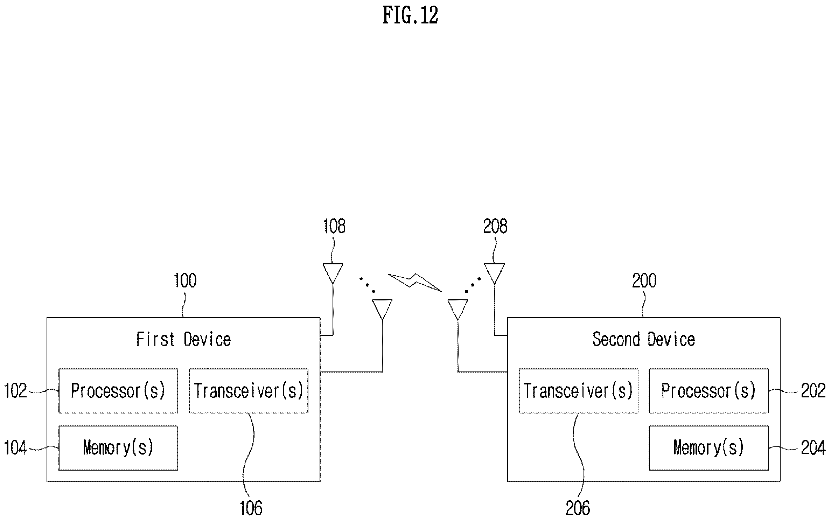

FIG. 12 is a diagram which illustrates a block diagram of a wireless communication system according to an embodiment of the present disclosure.

In reference to FIG. 12, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned.

Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method performed by a terminal in a wireless communication system, the method comprising:

receiving at least one channel state information-reference signal (CSI-RS) from a network;
calculating one channel quality indicator (CQI) based on a specific precoding matrix indicator (PMI) that is one of a plurality of PMIs respectively corresponding to a plurality of time units; and
transmitting, to the network, a CSI report including the one CQI, and codebook information corresponding to the plurality of PMIs,
wherein the one CQI is associated with the specific PMI and a specific time unit that is one of the plurality of time units.

2. The method of Claim 1, wherein:
the specific time unit is a first time unit of the plurality of time units within a configured window.

3. The method of Claim 1, wherein:
the specific time unit corresponds to a CSI reference resource.

4. The method of Claim 1, wherein:
the specific PMI corresponds to the specific time unit.

5. The method of Claim 1, wherein:
the specific time unit corresponds to a specific offset from a time unit that the CSI report is transmitted.

6. The method of Claim 1, wherein:
a first time unit of the plurality of time units within a configured window corresponds to a CSI reference resource.

7. The method of Claim 1, wherein:
a time duration of the time unit is a same as a periodicity of a CSI-reference signal(RS).

8. The method of Claim 1, wherein:
the plurality of time units have a same time duration.

9. A terminal in a wireless communication system, the terminal comprising:

at least one transceiver; and
at least one processor connected to the at least one transceiver,
wherein the at least one processor is configured to:

receive, through the at least one transceiver, at least one channel state information-reference signal (CSI-RS) from a network;
calculate one channel quality indicator (CQI) based on a specific precoding matrix indicator (PMI) that is one of a plurality of PMIs respectively corresponding to a plurality of time units; and
transmit, through the at least one transceiver, to the network, a channel state information (CSI) report including the one CQI, and codebook information corresponding to the plurality of PMIs,

wherein the one CQI is associated with the specific PMI and a specific time unit that is one of the plurality of time units.

10. A method performed by a base station in a wireless communication system, the method comprising:

transmitting at least one channel state information-reference signal (CSI-RS) to a terminal; and
receiving, from the terminal, a CSI report including one channel quality indicator (CQI), and codebook information corresponding to a plurality of precoding matrix indicators (PMI),
wherein the one CQI is calculated based on a specific PMI that is one of a plurality of PMIs respectively corresponding to a plurality of time units,
wherein the one CQI is associated with the specific PMI and a specific time unit that is one of the plurality of time units.

11. A base station in a wireless communication system, the base station comprising:

at least one transceiver; and
at least one processor connected to the at least one transceiver,
wherein the at least one processor is configured to:

transmit, through the at least one transceiver, at least one channel state information-reference signal (CSI-RS) to a terminal; and

receive, through the at least one transceiver, from the terminal, a CSI report including one channel quality indicator (CQI), and codebook information corresponding to a plurality of precoding matrix indicators (PMI),

wherein the one CQI is calculated based on a specific PMI that is one of a plurality of PMIs respectively corresponding to a plurality of time units,

wherein the one CQI is associated with the specific PMI and a specific time unit that is one of the plurality of time units.

12. A processing unit configured to control a terminal in a wireless communication system, the processing unit comprising:

at least one processor; and

at least one computer memory which is operably connected to the at least one processor, and based on being executed by the at least one processor, stores instructions for performing a method according to any one of Claim 1 to Claim 7.

13. At least one non-transitory computer readable medium storing at least one instruction, wherein:

the at least one instruction controls a device to perform a method according to any one of Claim 1 to Claim 7 in a wireless communication system by being executed by at least one processor.

# FIG.1

# FIG.2

Radio Frame 10ms

Fixed Size

Subframe 1ms

| 0 | 1 | 2 | 3 | 4 | 5 | 6 | 7 | 8 | 9 |
|---|---|---|---|---|---|---|---|---|---|

Subframe ={1,2,4} Slots

Slot

| 0 | 1 | 2 | 3 |
|---|---|---|---|

Slot={7,14} Symbols

Symbol

| 0 | 1 | 2 | 3 | 4 | 5 | 6 | 7 | 8 | 9 | 10 | 11 | 12 | 13 |
|---|---|---|---|---|---|---|---|---|---|----|----|----|----|

Size depends
on subcarrier
spacing

Mini-Slot
(URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG.4

FIG.5

# FIG.6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601

S602

S603     S604     S605     S606

S607     S608

· DL/UL ACK/NACK
· UE CQI/PMI RI REPORT
  USING PUSCH AND PUCCH

EP 4 518 175 A1

FIG.7

EP 4 518 175 A1

TRP 1

TRP 2

Layer group #1
for CW #1

Layer group #2
for CW #1

UE1

(a)

TRP 1

TRP 2

Layer group #1
for CW #1

Layer group #2
for CW #2

UE1

(b)

## FIG.8

Receive at least one CSI–RS ——S810

Calculate one CQI based on specific PMI that is one of
a plurality of PMIs respectively corresponding to
a plurality of time units ——S820

Transmit CSI report including one CQI and codebook information
corresponding to a plurality of PMIs to network ——S830

## FIG.9

Transmit at least one CSI–RS ——S910

Receive CSI report including one CQI calculated based on
specific PMI that is one of a plurality of PMIs respectively
corresponding to a plurality of time units and codebook information
corresponding to a plurality of PMIs from terminal ——S920

FIG.10

CSI reference resource
(slot $l$)

Slot $l+\tau$

Slot $l+2\tau$

··· | Periodic CMR/IMR | Periodic CMR/IMR | Periodic CMR/IMR | CSI report (slot n) | | ···

PMI$_{ref\_rsc}$    PMI$_{ref\_rsc+\tau}$    PMI$_{ref\_rsc+2\tau}$  ···   Time (slot)

Compressed in improved type II codebook

FIG.11

Slot $l\text{-}2\tau$

Slot $l\text{-}\tau$

CSI reference resource
(slot $l$)

Periodic
CMR/IMR

Periodic
CMR/IMR

Periodic
CMR/IMR

CSI
report
(slot n)

· · ·

· · ·

· · ·

$PMI_{ref\_rsc - 2\tau}$

$PMI_{ref\_rsc -\tau}$

$PMI_{ref\_rsc}$

Time
(slot)

Compressed in improved type II codebook

FIG.12

EP 4 518 175 A1

## INTERNATIONAL SEARCH REPORT

| International application No. |
|---|
| **PCT/KR2023/005662** |

**A.    CLASSIFICATION OF SUBJECT MATTER**

**H04B 7/0456**(2017.01)i; **H04B 7/06**(2006.01)i; **H04B 17/345**(2015.01)i; **H04B 7/024**(2017.01)i; **H04W 24/08**(2009.01)i; **H04W 72/23**(2023.01)i; **H04W 72/04**(2009.01)i; **H04L 5/00**(2006.01)i

According to International Patent Classification (IPC) or to both national classification and IPC

**B.    FIELDS SEARCHED**

Minimum documentation searched (classification system followed by classification symbols)

H04B 7/0456(2017.01); H04B 7/06(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 프리코딩 행렬 지시자(precoding matrix indicator), 채널 품질 지시자(channel quality indicator), 코드북(codebook), CSI 레퍼런스 자원(CSI reference resource)

**C.    DOCUMENTS CONSIDERED TO BE RELEVANT**

| Category* | Citation of document, with indication, where appropriate, of the relevant passages | Relevant to claim No. |
|---|---|---|
| X | US 2020-0403668 A1 (HUAWEI TECHNOLOGIES CO., LTD.) 24 December 2020 (2020-12-24) <br> See paragraphs [0156], [0159], [0161], [0170], [0173], [0175], [0233], [0250] and [0258]-[0259]; and figures 2-3. | 1-13 |
| A | WO 2022-024042 A1 (TELEFONAKTIEBOLAGET LM ERICSSON (PUBL)) 03 February 2022 (2022-02-03) <br> See paragraphs [0099]-[0135]. | 1-13 |
| A | US 2021-0351885 A1 (SAMSUNG ELECTRONICS CO., LTD.) 11 November 2021 (2021-11-11) <br> See paragraphs [0200]-[0218]; and figures 19-21. | 1-13 |
| A | US 2021-0320703 A1 (LG ELECTRONICS INC.) 14 October 2021 (2021-10-14) <br> See paragraphs [0226]-[0376]; and figures 9-14. | 1-13 |
| A | US 2021-0273709 A1 (ZTE CORPORATION) 02 September 2021 (2021-09-02) <br> See paragraphs [0030]-[0140]; and figure 3. | 1-13 |

☐ Further documents are listed in the continuation of Box C.    ☑ See patent family annex.

| | |
|---|---|
| \*    Special categories of cited documents: <br> "A"   document defining the general state of the art which is not considered to be of particular relevance <br> "D"   document cited by the applicant in the international application <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **24 July 2023** | **24 July 2023** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/005662**

| Patent document cited in search report | | | Publication date (day/month/year) | Patent family member(s) | | | Publication date (day/month/year) |
|---|---|---|---|---|---|---|---|
| US | 2020-0403668 | A1 | 24 December 2020 | CN | 111587542 | A | 25 August 2020 |
| | | | | CN | 111587542 | B | 18 February 2022 |
| | | | | EP | 3736997 | A1 | 11 November 2020 |
| | | | | EP | 3736997 | B1 | 28 June 2023 |
| | | | | US | 11290164 | B2 | 29 March 2022 |
| | | | | WO | 2019-148399 | A1 | 08 August 2019 |
| | | | | WO | 2019-149216 | A1 | 08 August 2019 |
| WO | 2022-024042 | A1 | 03 February 2022 | BR | 112023001056 | A2 | 07 March 2023 |
| | | | | EP | 4189844 | A1 | 07 June 2023 |
| US | 2021-0351885 | A1 | 11 November 2021 | WO | 2020-213964 | A1 | 22 October 2020 |
| US | 2021-0320703 | A1 | 14 October 2021 | WO | 2020-022720 | A1 | 30 January 2020 |
| US | 2021-0273709 | A1 | 02 September 2021 | CN | 110635883 | A | 31 December 2019 |
| | | | | CN | 110635883 | B | 27 September 2022 |
| | | | | EP | 3813415 | A1 | 28 April 2021 |
| | | | | US | 11509371 | B2 | 22 November 2022 |
| | | | | WO | 2020-001132 | A1 | 02 January 2020 |

Form PCT/ISA/210 (patent family annex) (July 2022)